Europäisches Patentamt

(19) European Patent Office

Office européen des brevets

(11) Publication number : **0 289 228 B1**

# EUROPEAN PATENT SPECIFICATION

(45) Date of publication of patent specification :
16.10.91 Bulletin 91/42

(51) Int. Cl.⁵ : **B26B 21/06**

(21) Application number : **88303648.5**

(22) Date of filing : **22.04.88**

(54) **A method of making a razor.**

(30) Priority : 24.04.87 US 42493
21.08.87 US 88368

(43) Date of publication of application :
02.11.88 Bulletin 88/44

(45) Publication of the grant of the patent :
16.10.91 Bulletin 91/42

(84) Designated Contracting States :
AT BE CH DE ES FR GB GR IT LI LU NL SE

(56) References cited :
EP-A- 0 176 322
GB-A- 1 444 545
GB-A- 1 565 296
GB-A- 2 087 287
GB-A- 2 155 383

(56) References cited :
US-A- 2 789 346
US-A- 3 070 883
US-A- 3 703 765
US-A- 4 489 627

(73) Proprietor : WARNER-LAMBERT COMPANY
201 Tabor Road
Morris Plains New Jersey 07950 (US)

(72) Inventor : Butlin, Edward C.
1304 Hardscrabble Boulevard
Erie Pennsylvania 16505 (US)
Inventor : Conrad, William T., Jr.
32 Thompson Street
Shelton Connecticut 06484 (US)

(74) Representative : Coxon, Philip et al
Eric Potter & Clarkson St. Mary's Court St.
Mary's Gate
Nottingham NG1 1LE (GB)

**Description**

This invention relates to a method for making a razor, more particularly a disposable razor.

Currently, disposable razors provide a substantial portion of the market for wet shaving.

As used herein the expression disposable razor refers equally to a razor having a razor head with an integral handle, and to a razor having a disposable razor head (i.e. a cartridge) which can be removed from the handle. In general, the razor head comprises a blade cover, a blade seat, one or more blades and a spacer between adjacent blades.

With the exception of the blade or blades (and possibly the spacer), disposable razors are made out of thermoplastics material. The cap and blade seat components, depending upon the ultimate design, are moulded separately and then assembled. For example the "MicroTrac" disposable razor manufactured by Gillette moulds a single unit blade seat, back and cap, with the cap including outwardly extending fingers. The blade subassembly consisting of two blades and a spacer is inserted between the moulded cap and seat with the finger-like projections extending from the top of the cap serving as leaf springs to retain the blade subassembly. This combination is then mated to a handle by press fitting into a tab-finger combination (GB-A-2087287). It is apparent that this process involves not only separate steps, but separate work stations requiring individual subassembly and ultimately assembly.

Other assembly processes for disposable razors utilize staking from projections depending either from the cap or the seat, which mate with reciprocal openings in the other part and position the blades and/or spacer. The handle is usually made separately from the seat. Again, separate assembly steps at separate locations are required to produce the disposable razor.

Ultimately, a disposable razor which could be assembled with a single work station having all the plastic parts produced in a single cavity would be desirable because the steps of subassembly, final assembly and the conveying of the various components from location to location around the manufacturing area could be eliminated. Prior art patents have disclosed various attempts to accomplish this.

GB-A-1,565,296 discloses making a unitary handle guard member and blade support and then attaching a Z-shaped blade by upset rivets or the like to the support.

US-A-4,489,627 describes a razor manufacturing process in which a double edged strip of blade metal is parted along a centre line and cropped to form two strips, each containing a series of spaced apart blades connected by webs to an elongate backing strip. Each strip, which now consists of a plurality of blades and a backing strip, is fed into a moulding machine in which either the shaving unit, or blade-containing-component of a razor, is moulded directly around each individual blade. The web is then parted to release the moulded razor, etc. from the back strip. It is not clear in this patent how the remaining razor components are manufactured. It is apparent, however, that the moulding machine completely surrounds the blade segment during moulding. This therefore requires the handling of an elongated metal strip, its control and insertion in either a multi-cavity mould or a very large single cavity mould and either a series of razors or heads joined together in a single unit which must be subsequently disassembled. Conveying of a metal web of the type described is extremely difficult when it is necessary to protect a delicate cutting edge and even more so when two cutting edges must be protected.

Other patents disclosing moulding a plastic razor head around a blade are US-A-3,070,883 ; US-A-2,789,346 ; and US-A-3,703,765.

US-A-3,070,883 describes a method of moulding two razors around a double edged razor blade in a single moulding operation. The razor blade is held in position in the body of the mould by a plurality of spacing pins positioned above and below the blade. The pins are out of alignment in order to bend the blade whilst holding it in a proper position during moulding. The positioning of the spacing pins results in spaced oppositely placed holes in the top and underside portion of the body member. When moulding is complete, the two razors are separated by breaking the razor blade in half.

According to the present invention there is provided a method of making a razor comprising a blade having a shaving edge, unitary blade covering means and blade support means, the side of said support means opposite said blade cutting edge having at least one opening positioned on either side of a downwardly extending sleeve, the method comprising :

(a)  supporting said blade within a mould by butting said blade by a forked member having a plurality of coplanar upper support surfaces, the blade is positioned within the mould by indentations formed at either end of said blade ;

(b)  forming said unitary blade support means and covering means by introducing material into said mould, thereby substantially encasing all edges of the blade except the shaving edge, the support surfaces corresponding to the positioning of openings formed in the rearward portion of the blade support means.

Preferably the method further includes the step :

(c)  mating said unitary means with a handle.

The supporting is desirably carried out by a trident shaped support means.

The covering means is preferably moulded in the form of a fingered cap.

The handle may be used as part of the male mould member.

The blade cover, blade support and handle are typically a thermoplastics material.

It has been found that in order to successfully mould a unitary cap and cover utilizing the blade as a portion of a mandrel, that it is highly desirable to support the blade not only in the centre, but also at either side to prevent blade distortion resulting from the forces generated by inflowing thermoplastics material during the moulding process. Our co-pending European Patent Application EP-A-0288301, of even filing date, entitled "Method of making a razor", describes the concept of forming a centre mandrel of thermoplastics material and utilizing the combination of the blade and the centre mandrel as a template-male mould member for subsequent moulding of a compatible cap and blade support. Attempts to eliminate what is in essence a two step moulding process had been unsuccessful, because it was found that positioning of the blade at either end allowed the blade to bow in the centre. In the present invention, the preferred support configuration and resulting configuration of the blade support for the razor resulted from realization that the blade would have to be supported along its entire length during the formation of a unitary cover and support for the razor.

Reference is now made to the accompanying drawings, in which :

Figure 1 is a top plan view of a razor made using the method according to the invention ;

Figure 2 is a bottom plan view of the razor shown in Figure 1 ;

Figure 3 is a bottom plan view of a blade seat of the razor without the blade ;

Figure 4 is a bottom plan view of a blade for use with the method according to the invention ;

Figure 5 is a perspective view of a trident for use with the method according to the invention ;

Figure 6 is a front elevational view of a handle for use with the razor made according to the invention ; and

Figure 7 is a side elevational view of the handle shown in Figure 6.

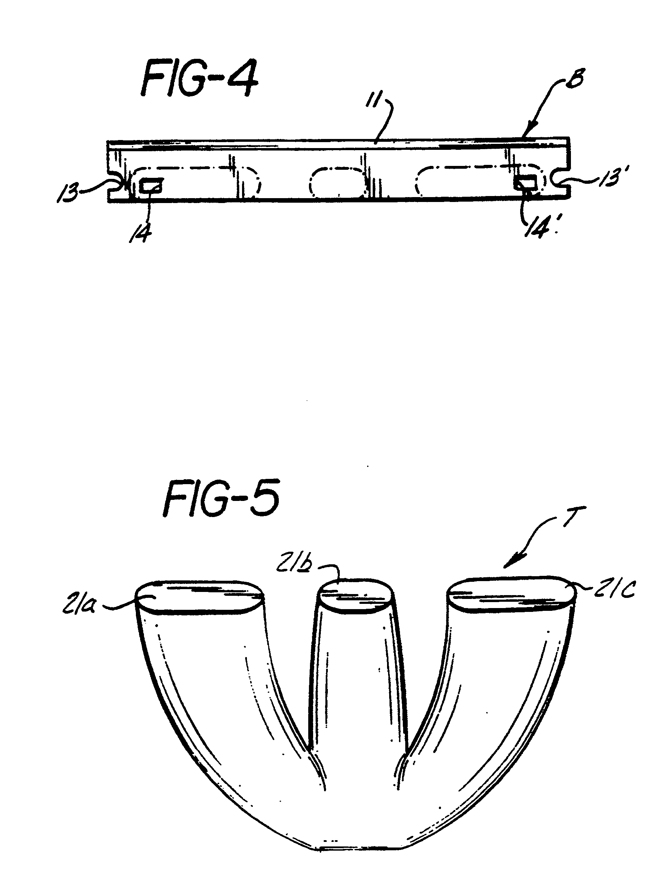

Referring to Figure 4 a razor blade B having locating means in the form of notches 13 and 13', blade shaving edge 11 and slots 14 and 14' is used in the disposable razor of this invention. The blade B is positioned within the mould (not shown) such that mould inserts engage notches 13 and 13'. This aligns the blade B in a proper orientation for the subsequent moulding process to follow. The blade B is supported by support member T which is preferably trident-shaped (see Figure 5) having upward support surfaces 21a, 21b and 21c.

As can be seen by reference to Figure 4, the support surfaces 21a, 21b and 21c engage the blade B generally in the areas shown by the phantom lines at the rear portion of the blade B opposite the cutting edge 11. Thus supported, the combination of the blade B and trident support member T form a male member around which a unitary blade support means and blade covering means is formed. The blade support means is in the form of a seat 15, whilst the blade covering means is in the form of a cap 22. The seat has a support surface for supporting the blade B.

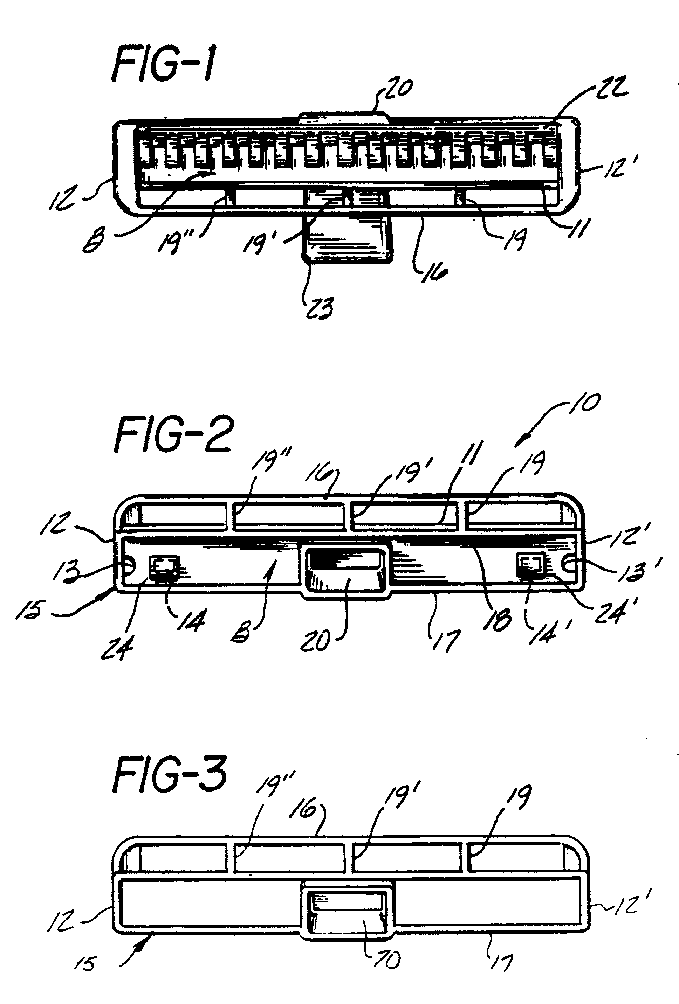

The actual plastic moulded shape can best be understood by reference to Figures 1, 2 and 3. As can be seen from Figures 3 and 5 the various trident arm surfaces 21a, 21b and 21c correspond to the positioning of openings formed in the rearward portion of the blade seat 15.

The generally rectangular seat 15 includes a back, longitudinally-extending support bar 17, an essentially centrally positioned support bar 18 and a downwardly projecting sleeve 20, which forms the rearward portion of the blade seat 15 ; the blade seat 15 also includes sides 12 and 12'. The sleeve is positioned substantially centrally longitudinally of the blade B. The openings formed by the inner surfaces of sides 12 and 12', longitudinal support bar 17 and support bar 18 correspond generally to the trident top surfaces 21a and 21c while trident surface 21b corresponds to the opening in the sleeve 20 adjacent the blade B, in the preferred configuration.

When the trident support configuration is used, sleeve 20 is open at the end, while if only a 2-pronged forked support is used to support the blade B, the sleeve 20 is closed with plastic at the support surface end abutting the blade b.

A guard bar 16 is formed along the leading portion of the blade seat 15 and extends essentially parallel to the rear support bar 17 and central support bar 18. Ribs 19, 19' and 19" extend from the support bar 18 to the guard bar 16. As can be seen more readily from Figure 2, the blade B only extends a short distance over the centre support bar 18 with the guard bar ribs 19, 19' and 19" forming more of an extension than an actual support for the blade B itself.

The cap 22 is moulded as a single unitary piece attached to the blade seat 15 by plastic which extends around the rear portion of the blade B and outward to form the cap 22 and also through blade slots 14 and 14' to form upward extending thermoplastics tabs 24 and 24' respectively, which join the cap 22 to the blade seat 15. The tabs 24 and 24' are slightly larger than holes 14 and 14' and thereby provide an anchoring site for the cap 22 to the blade B as well as to the centre rib 18. The sleeve 20 as can best be seen by reference to Figure 1, provides a site for a handle attachment designated 23.

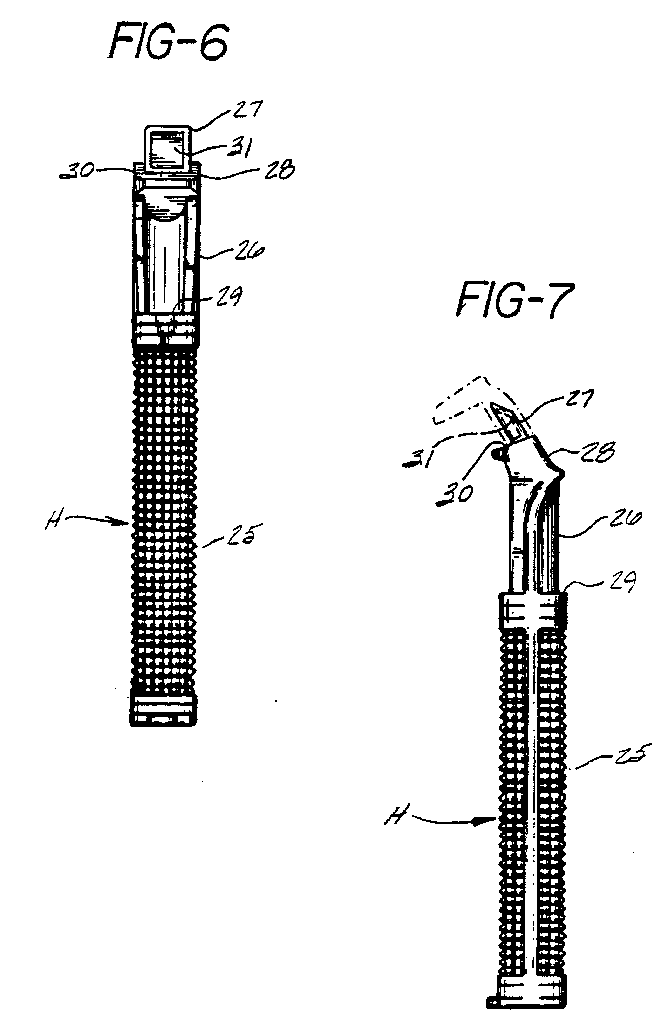

In a preferred variation of this invention, the handle shown in Figures 6 and 7, and designated H, is preinserted into the mould prior to the formation of the blade and seat combination and, as part of the male portion of the mould, the seat 15 and cap 22 are formed around it eliminating a subsequent moulding step. The preinserted handle H according to this invention can be made of plastic or other materials and if made of plastic can be inserted in the mould cavity used for the razor head or formed in the same mould used for the head.

The handle H includes gripping area 25, having a flange 26 extending upwardly axially from a shoulder 29. The flange 26, which is thinner than the gripping area 25, includes a projection 28 extending upward at an obtuse angle from its top portion. A tongue 27 extends axially outward from the projection 28 depending from a shoulder 30 ; the shoulder 30 is provided on top of the projection 28. The tongue 27 contains an opening 31 which forms an anchor site for the sleeve 20 of blade seat 15. Thus, when moulding is completed fluid thermoplastic forming the blade seat 15 has flowed through and around opening 31 and tongue 27 and set to provide a completed disposable razor. When this method is used, the trident centre of the support member T is modified to accept the handle.

While the fingered cap 12 shown in Figure 1 is preferable, any particular configuration for a blade cover may be used. The present invention provides maximum support with minimum use of thermoplastics material and ease of mould removal from the male member form by the combination of the blade and mould blade support.

## Claims

1. A method of making a razor comprising a blade (B) having a shaving edge (11), unitary blade covering means (22) and blade support means (15), the side of said support means (15) opposite said blade cutting edge (11) having openings (14, 14') positioned or either side of a downwardly extending sleeve (20), the method comprising :

(a) supporting said blade (B) within a mould by butting said blade (B) by a forked member (T) having a plurality of coplanar upper support surfaces (21a, 21b, 21c), the blade (B) is positioned within the mould by indentations (13, 13') formed at either end of said blade ;

(b) forming said unitary blade support means (15) and covering means (22) by introducing material into said mould, thereby substantially encasing all edges of the blade (B) except the shaving edge (11), the support surfaces (21a, 21b, 21c) corresponding to the positioning of said openings formed in the rearward portion of the blade support means (15).

2. A method according to Claim 1, characterised in that the supporting is carried out by a trident shaped support means (T).

3. A method according to Claim 1 or 2, characterised in that the covering means (22) is moulded in the form of a fingered cap.

4. A method according to any preceding claim, further characterised by the step :

(c) mating said unitary means with a handle (H, 23).

5. A method according to Claim 4, characterised in that the handle is used as part of the male mould member.

## Patentansprüche

1. Verfahren zur Herstellung eines Rasierapparats, umfassend eine Klinge (B) mit einer Rasier- bzw. Schneidkante (11) sowie (material)einheitlich geformte Klingenabdeckmittel (22) und Klingenauflagemittel (15), wobei die der Klingen-Schneidkante (11) gegenüberliegende Seite des Auflangemittels (15) Öffnungen (14, 14') auf jeder Seite einer nach unten abgehenden Muffe (20) aufweist, dadurch gekennzeichnet, daß

(a) die Klinge in einer Form durch Unterstützung der Klinge (B) mittels eines gegabelten Elements (T) gehaltert wird, das eine Anzahl von in einer Ebene liegenden oberen Stützflächen (21a, 21b, 21c) aufweist, wobei die Klinge (B) in der Form mit Hilfe von an jedem Ende der Klinge ausgebildeten Einkerbungen (13, 13') positioniert wird, und

(b) die (material) einheitlich geformten Klingenauflagemittel (15) und Abdeckmittel (22) durch Einführen von Material in die Form geformt werden, so daß mit Ausnahme der Rasier- bzw. Schneidkante (11) alle Kanten der Klinge (B) praktisch eingekapselt werden, wobei die Stützflächen (21a, 21b, 21c) mit der Positionierung der im hinteren Abschnitt des Klingenauflagemittels (15) ausgebildeten Öffnungen korrespondieren.

2. Verfahren nach Anspruch 1, dadurch gekennzeichnet, daß die Halterung mittels eines dreizackförmigen Stützelements (T) erfolgt.

3. Verfahren nach Anspruch 1 oder 2, dadurch gekennzeichnet, daß das Abdeckmittel (22) in Form einer mit Fingern versehenen Kappe geformt wird.

4. Verfahren nach einem der vorangehenden Ansprüche, gekennzeichnet durch den weiteren Schritt :

(c) Vereinigen der (material)einheitlichen Mittel mit einem Handgriff (H, 23).

5. Verfahren nach Anspruch 4, dadurch gekennzeichnet, daß der Handgriff als Teil des Innenformelements benutzt wird.

**Revendications**

1. Procédé de fabrication d'un rasoir comprenant une lame (B) dotée d'un bord coupant (11), un moyen de couverture de lame (22) monobloc et un moyen de support de lame (15), la face de moyen de support de lame (15) opposée audit bord coupant de lame (11) présentant des ouvertures (14, 14'), positionnées des deux côtés d'une douille s'étendant vers le bas (20), procédé comprenant les étapes suivantes :

(a) on maintient ladite lame (B) à l'intérieur d'un moule, par mise en butée de ladite lame (B) grâce à un organe fourchu (T) présentant une pluralité de surfaces de support supérieures (21a, 21b, 21c) coplanaires, la lame (B) étant positionnée à l'intérieur du moule grâce à des indentations (13, 13) formées sur les extrémités de ladite lame ;

(b) on forme ledit moyen de support monobloc de lame (15) et dudit moyen de couverture (22), en introduisant un matériau dans ledit moule, de manière à encastrer pratiquement tous les bords de la lame (B), à l'exception du bord coupant (11), les surfaces de support correspondant au positionnement desdites ouvertures étant formées dans la partie arrière du moyen de support de lame (15).

2. Procédé selon la revendication 1, caractérisé en ce que le maintien est obtenu grâce à un moyen de support en forme de trident (T).

3. Procédé selon la revendication 1 ou 2, caractérisé en ce que le moyen de couverture (22) est moulé et présente la forme d'un capuchon à doigts.

4. Procédé selon l'une quelconque des revendications précédentes, caractérisé en outre en ce que:

(c) l'on associe ledit moyen monobloc à un manche (H, 23).

5. Procédé selon la revendication 4, caractérisé en ce que le manche est utilisé comme partie de l'organe de moulage mâle.

FIG-1

FIG-2

FIG-3

FIG-4

FIG-5

## FIG-6

## FIG-7